# EUROPÄISCHE PATENTSCHRIFT

(11) **EP 4 070 166 B1**
(45) Veröffentlichungstag und Bekanntmachung des Hinweises auf die Patenterteilung: **06.09.2023**
(21) Anmeldenummer: 20820072.5
(22) Anmeldetag: 01.12.2020
(51) Int. Cl.: G05D 1/02, G08G 7/00, G08G 1/00

(54) **VERFAHREN ZUM KOORDINIEREN VON FAHRZEUGEN EINES FAHRZEUGVERBUNDES SOWIE STEUEREINHEIT**
METHOD FOR COORDINATING VEHICLES OF A VEHICLE COMBINATION, AND CONTROL UNIT
PROCÉDÉ DE COORDINATION DE VÉHICULES D'UNE COMBINAISON DE VÉHICULES ET UNITÉ DE COMMANDE

(30) Priorität: 04.12.2019 DE 102019132944
(43) Veröffentlichungstag der Anmeldung: 12.10.2022
(73) Patentinhaber: ZF CV Systems Europe BV, 1170 Brüssel (BE)
(72) Erfinder: MATTHAEI, Richard, 31789 Hameln (DE)
(74) Vertreter: Schäferjohann, Volker
(86) Internationale Anmeldenummer: PCT/EP2020/084041
(87) Internationale Veröffentlichungsnummer: WO 2021/110638

(56) Entgegenhaltungen:
- WO-A1-2012/014041
- DE-A1-102017 004 741

## Beschreibung

Die Erfindung betrifft ein Verfahren zum Koordinieren von Fahrzeugen eines Fahrzeugverbundes, insbesondere mit dem Ziel der Unfallvermeidung innerhalb des Fahrzeugverbundes im fahrdynamischen Grenzbereich, sowie eine Steuereinheit zur Durchführung des Verfahrens.

Es ist bekannt, dass sich mehrere Fahrzeuge aufeinander abgestimmt auf einer Fahrbahn in kurzen Ist-Folgeabständen hintereinander bewegen können, um durch einen verringerten Luftwiderstand Kraftstoff zu sparen und/oder durch Automation der Funktion Lenkzeiten zu reduzieren. Derartig abgestimmte Fahrzeuge werden auch als Fahrzeugverbund, Fahrzeugkonvoi oder Platoon bezeichnet. Bei einer solchen abgestimmten Fahrt soll der heute übliche Sicherheitsabstand zwischen den einzelnen Fahrzeugen unterschritten werden, wenn sich die Fahrzeuge untereinander beispielsweise über eine drahtlose V2X-Kommunikation koordinieren. Koordiniert werden die einzelnen Fahrzeuge des Fahrzeugverbundes dabei beispielsweise von einem Leitfahrzeug, das über die drahtlose V2X-Kommunikation mit den anderen Fahrzeugen kommunizieren und Daten, insbesondere fahrdynamische Daten für die oder von den jeweiligen Fahrzeugen, austauschen kann. Ferner können auch Informationen über die Umgebung inklusive der umgebenden Verkehrsteilnehmer, die nicht zum Fahrzeugverbund gehören, ausgetauscht werden.

Das Leitfahrzeug kann dabei insbesondere einen bestimmten Soll-Folgeabstand sowie auch eine zentrale Beschleunigungsanforderung festlegen und über die V2X-Kommunikation kommunizieren, wobei der Soll-Folgeabstand beispielsweise über ein Abstandsregelsystem und die zentrale Beschleunigungsanforderung als Soll-Beschleunigung über das Antriebssystem und/oder das Bremssystem von den einzelnen Fahrzeugen des Fahrzeugverbundes eingestellt bzw. umgesetzt wird. Dadurch kann gewährleistet werden, dass die einzelnen Fahrzeuge des Fahrzeugverbundes schnell aufeinander reagieren können, wodurch eine Beeinträchtigung der Sicherheit vermieden und somit das Unterschreiten des Sicherheitsabstandes gerechtfertigt werden kann, da die Reaktionszeiten verkürzt werden. Es ist auch möglich, dass die Folgefahrzeuge des Fahrzeugverbundes (insbesondere für den Fall einer dezentralen Fahrzeugverbundkoordination) ihre Soll-Folgeabstände und Soll-Beschleunigungen selbst anhand von vorliegenden fahrdynamischen Daten festlegen und dabei auch auf zusätzliche Informationen, die in Datensignalen über die V2X-Kommunikation bereitgestellt werden, zurückgreifen können.

Dadurch ist es im Normalfall möglich, den Fahrzeugverbund zu koordinieren und die einzelnen Fahrzeuge in einer beliebigen positiven oder negativen Beschleunigungssituation derartig zu betreiben, dass die Fahrzeuge innerhalb eines Fahrzeugverbundes möglichst nicht miteinander kollidieren. Dazu kann die Beschleunigung der einzelnen Fahrzeuge innerhalb des Fahrzeugverbundes ergänzend derartig aufeinander abgestimmt werden, dass die Soll-Beschleunigung der einzelnen Fahrzeuge auf eine Maximal-Beschleunigung begrenzt wird. Die Maximal-Beschleunigung richtet sich hierbei nach dem Fahrzeug mit dem geringsten Antriebsvermögen bzw. dem geringsten Bremsvermögen innerhalb des Fahrzeugverbundes. So wird sichergestellt, dass die Fahrzeuge vor dem Fahrzeug mit dem geringsten Bremsvermögen nicht schneller verzögern bzw. die Fahrzeuge hinter dem Fahrzeug mit dem geringsten Antriebsvermögen nicht schneller positiv beschleunigen und dadurch ein Auffahren vermieden wird. Problematisch ist jedoch, dass innerhalb des Fahrzeugverbundes häufig nicht bekannt ist, wie hoch das maximale Antriebsvermögen bzw. das maximale Bremsvermögen der einzelnen Fahrzeuge ist und wie schnell dieses erreicht werden kann.

Aufgabe der Erfindung ist, ein Verfahren zum Koordinieren von Fahrzeugen eines Fahrzeugverbundes anzugeben, mit dem beim Beschleunigen (positiv wie negativ) der einzelnen Fahrzeuge ein sicherer Fahrbetrieb innerhalb des Fahrzeugverbundes bis in den dynamischen Grenzbereich hinein gewährleistet werden kann. Aufgabe der Erfindung ist weiterhin, eine Steuereinheit und ein Fahrzeug anzugeben.

Aus der WO2012/014041A1 ist eine Fahrzeugsteuervorrichtung und ein Fahrzeugsteuersystem zum Durchführen einer vorbestimmten Steuerung auf der Grundlage von Informationen, die sich auf ein anderes Fahrzeug beziehen, das in der Nähe eines Trägerfahrzeugs fährt, bekannt. Diese Steuereinheit ist besonders für das Steuern des Kolonnenfahrens geeignet.

Aus der DE102017004741A1 ist eine Steueranordnung zum Einstellen eines Abstandes zwischen zwei Fahrzeugen sowie ein Verfahren zum Einstellen eines Abstandes zwischen zwei Fahrzeugen mit einer derartigen Steueranordnung bekannt, die ebenfalls für die Koordinierung von im Platoon zugehörigen Fahrzeugen geeignet ist.

Diese Aufgabe wird durch ein Verfahren nach Anspruch 1 sowie durch eine Steuereinheit und ein Fahrzeug nach den weiteren unabhängigen Ansprüchen gelöst.

Erfindungsgemäß ist demnach ein Verfahren zum Koordinieren von Fahrzeugen eines Fahrzeugverbundes vorgesehen, wobei die Fahrzeuge jeweils ein elektronisch steuerbares Antriebssystem und/oder ein elektronisch steuerbares Bremssystem aufweisen zur Umsetzung einer angeforderten Soll-Beschleunigung, die entweder positiv oder negativ sein kann, unter Berücksichtigung eines Soll-Rucks bzw. eines Soll-Beschleunigungs-Gradienten und jedem Fahrzeug eine Position im Fahrzeugverbund zugeordnet ist. Dabei werden mindestens die folgenden Schritte durchgeführt:
- Umsetzen der Soll-Beschleunigung in jedem Fahrzeug des Fahrzeugverbundes durch elektrisches Ansteuern des Antriebssystems und/oder des Bremssystems des jeweiligen Fahrzeuges unter Berücksichtigung des Soll-Rucks und von vorgegebenen fahrzeugspezifischen Beschleunigungsparametern, wobei durch die Beschleunigungsparameter festgelegt wird, wie die angeforderte Soll-Beschleunigung umgesetzt werden soll;
- vorzugsweise fortlaufendes Beobachten (Monitoring) einer Ist-Fahrdynamik vorzugsweise aller Fahrzeuge des Fahrzeugverbundes während der Umsetzung der Soll-Beschleunigung unter Berücksichtigung des Soll-Rucks und der fahrzeugspezifischen Beschleunigungsparameter;
- Bewerten der beobachteten Ist-Fahrdynamik der Fahrzeuge anhand bzw. auf Grundlage der angeforderten Soll-Beschleunigung für das jeweilige Fahrzeug unter Berücksichtigung des Soll-Rucks und der fahrzeugspezifischen Beschleunigungsparameter vorzugsweise für alle Fahrzeuge und Ausgeben eines fahrzeugspezifischen Bewertungsergebnisses;
- Ermitteln und Ausgeben eines Beschleunigungs-Grenzwertes und/oder eines Ruck-Grenzwertes in Abhängigkeit des fahrzeugspezifischen Bewertungsergebnisses und Anpassen der fahrzeugspezifischen Beschleunigungsparameter in mindestens einem der Fahrzeuge des Fahrzeugverbundes in Abhängigkeit des ermittelten Beschleunigungs-Grenzwertes und/oder des Ruck-Grenzwertes zum nachfolgenden Umsetzen der Soll-Beschleunigung unter Berücksichtigung des Soll-Rucks und der zumindest für einige der Fahrzeuge des Fahrzeugverbundes angepassten fahrzeugspezifischen Beschleunigungsparameter.

Unter dem Begriff fahrzeugspezifisch wird hierbei verstanden, dass jedem Fahrzeug ein Parametersatz von Beschleunigungsparametern bzw. ein Bewertungsergebnis zugeordnet ist. Dadurch wird vorteilhafterweise erreicht, dass für jedes Fahrzeug einzeln geprüft wird, ob dieses imstande ist, die angeforderte Soll-Beschleunigung unter Berücksichtigung des Soll-Rucks umzusetzen. Dazu wird durch das Beobachten und Bewerten in situ das maximale Bremsvermögen und/oder das maximale Antriebsvermögen des jeweiligen Fahrzeuges berücksichtigt, so dass dieses nicht zwangsläufig vorab bereits zu ermitteln ist und dennoch ein sicherer Fahrbetrieb gewährleistet werden kann. Andererseits kann beispielsweise in Falle eines Wechsels des Fahrzeugverbunds ein bereits verfügbarer Parametersatz von Beschleunigungsparametern als Initialisierung eingesetzt werden. Durch die Beschleunigungsparameter kann zudem fahrzeugspezifisch festgelegt werden, wie die Fahrdynamik des jeweiligen Fahrzeuges in Richtung der angeforderten Soll-Beschleunigung angepasst werden soll, um ein Auffahren der Fahrzeuge während des Beobachtens und des Bewertens zu vermeiden.

Damit ermöglicht das erfindungsgemäße Verfahren insbesondere in fahrdynamischen Grenzsituationen bzw. Notsituationen eine Vermeidung von Folgeunfällen im Fahrzeugverbund und gleichzeitig auch eine möglichst schnelle Abbremsung des Fahrzeugverbundes.

Vorzugsweise ist dabei vorgesehen, dass das Bewerten der beobachteten Ist-Fahrdynamik ein Vergleichen der Ist-Fahrdynamik mit einer Soll-Fahrdynamik für das jeweilige Fahrzeug beinhaltet zum Ermitteln, ob das jeweilige Fahrzeug imstande ist, die Soll-Fahrdynamik zu erreichen, wobei die Soll-Fahrdynamik vorzugsweise durch die Soll-Beschleunigung unter Berücksichtigung der Beschleunigungsparameter angegeben wird. Damit ist in situ ein einfacher Soll-Ist-Vergleich möglich, aus dem unmittelbar abgeleitet werden kann, ob das jeweilige Fahrzeug imstande ist, die Soll-Beschleunigung umzusetzen.

Gemäß einer bevorzugten Weiterbildung ist außerdem vorgesehen, dass als Beschleunigungsparameter eine Start-Beschleunigung zum Festlegen einer anfänglichen Zwischen-Beschleunigung des jeweiligen Fahrzeuges während der Umsetzung der Soll-Beschleunigung und/oder ein Start-Beschleunigungs-Gradient bzw. ein Start-Ruck zum Anpassen der Zwischen-Beschleunigung in Richtung der angeforderten Soll-Beschleunigung vorgegeben werden, um die angeforderte Soll-Beschleunigung unter Berücksichtigung der Beschleunigungsparameter umzusetzen. Damit kann den jeweiligen Fahrzeugen in vorteilhafter Weise eine Start-Fahrdynamik vorgegeben werden, die vorzugsweise jedes Fahrzeug mit hoher Wahrscheinlichkeit imstande ist zu leisten. Ausgehend davon kann mit dem Start-Beschleunigungs-Gradienten bzw. dem Start-Ruck als Soll-Beschleunigungs-Gradient bzw. Soll-Ruck fahrzeugspezifisch festgelegt werden, wie das jeweilige Fahrzeug beschleunigt werden soll, um die Soll-Beschleunigung zu erreichen, so dass für jedes Fahrzeug fortlaufend geprüft werden kann, ob das maximale Antriebsvermögen bzw. Bremsvermögen erreicht ist.

Gemäß einer weiteren bevorzugten Ausbildung ist vorgesehen, dass als Beschleunigungsparameter eine Maximal-Beschleunigung und/oder ein Maximal-Ruck festgelegt werden zum Begrenzen einer aktuell angeforderten Zwischen-Beschleunigung bzw. des Soll-Rucks beim Umsetzen der angeforderten Soll-Beschleunigung unter Berücksichtigung der Beschleunigungsparameter. Demnach kann den jeweiligen Fahrzeugen eine Begrenzung vorgegeben werden, die zur optimalen Abstimmung des gesamten Fahrzeugverbundes beispielsweise in Abhängigkeit des maximalen Antriebsvermögens und/oder des maximalen Bremsvermögens eines der Fahrzeuge im Fahrzeugverbund vorgegeben bzw. angepasst werden kann. Vorzugsweise werden diese Maximal-Beschleunigung bzw. dieser Maximal-Ruck derartig festgelegt, dass diese dem maximalen Antriebsvermögen bzw. Bremsvermögen des am schlechtesten (positiv) beschleunigenden oder abbremsenden Fahrzeuges entsprechen. Vorteilhafterweise wird dies durch die im erfindungsgemäßen Verfahren ermittelten Beschleunigungs- und/oder Ruck-Grenzwerte charakterisiert, so dass die Maximal-Beschleunigung bzw. der Maximal-Ruck vorzugsweise in Abhängigkeit davon festgelegt und/oder angepasst werden können.

Vorzugsweise kann dabei vorgesehen sein, dass die Maximal-Beschleunigung in Abhängigkeit des ermittelten Beschleunigungs-Grenzwertes und/oder der Maximal-Ruck in Abhängigkeit des ermittelten Ruck-Grenzwertes nur für die Fahrzeuge des Fahrzeugverbundes angepasst wird, die bei einer Vorgabe einer positiven Soll-Beschleunigung hinter dem dem Beschleunigungs-Grenzwert und/oder dem Ruck-Grenzwert zugeordneten Fahrzeug fahren, und bei einer Vorgabe einer negativen Soll-Beschleunigung vor dem dem Beschleunigungs-Grenzwert und/oder dem Ruck-Grenzwert zugeordneten Fahrzeug fahren. Damit wird die Beschleunigung bzw. der Ruck vorteilhafterweise nur für die Fahrzeuge im Fahrzeugverbund begrenzt, die ohne die Begrenzung mit einem der Fahrzeuge des Fahrzeugverbundes kollidieren würden.

Vorzugsweise ist weiterhin vorgesehen, dass der Soll-Ruck, der zu Beginn dem Start-Ruck entsprechen kann, des jeweiligen Fahrzeuges in Abhängigkeit der Position des Fahrzeuges innerhalb des Fahrzeugverbundes und der erfindungsgemäß ermittelten Beschleunigungsparameter festgelegt wird. Dadurch wird erreicht, dass nicht jedes Fahrzeug in gleichem Maß ausgehend von der Start-Beschleunigung anzutreiben bzw. abzubremsen ist. Dadurch können die Fahrzeuge vorteilhafterweise untereinander während der Beobachtungs- und Bewertungsphase mit unterschiedlicher Fahrdynamik angetrieben bzw. abgebremst werden, und damit bei entsprechender positionsgetreuer Wahl des Soll-Rucks ein Auflaufen vermieden werden.

Vorzugsweise ist dazu vorgesehen, dass der Soll-Ruck des jeweiligen Fahrzeuges mit steigender Position innerhalb des Fahrzeugverbundes abnimmt, wobei die Position des ersten Fahrzeuges des Fahrzeugverbundes geringer ist als die Position des letzten Fahrzeuges des Fahrzeugverbundes. Demnach wird vorteilhafterweise erreicht, dass bei einer positiven Soll-Beschleunigung das erste Fahrzeug ausgehend von der Start-Beschleunigung auf einer steileren Rampe in Richtung der positiven Soll-Beschleunigung beschleunigt wird und die nachfolgenden Fahrzeuge langsamer, so dass während der Bewertung der Ist-Fahrdynamik die nachfolgenden Fahrzeuge durch ihre weniger steilen Rampen nicht auf das erste Fahrzeug auflaufen können. Dies gilt sukzessive für alle weiteren Fahrzeuge in analoger Weise.

Entsprechend wird bei einer angeforderten negativen Soll-Beschleunigung bzw. einem Abbremsen der Fahrzeuge ein vom Wert her geringerer Soll-Ruck für das letzte Fahrzeug angesetzt, was einer betragsmäßig steileren Rampe und damit einer stärkeren Änderung der Verzögerung (negative Beschleunigung) in Richtung der negativen Soll-Beschleunigung entspricht. Damit wird das letzte Fahrzeug mit der höheren Position mit dem geringsten (bzw. betragsmäßig höchsten) Soll-Ruck abgebremst, so dass dieses nicht auf die zuvor fahrenden Fahrzeuge, die mit einem höheren (bzw. betragsmäßig geringeren) Soll-Ruck abgebremst werden, auflaufen kann. Dies gilt sukzessive für alle weiteren Fahrzeuge in analoger Weise.

Vorzugsweise ist ergänzend oder alternativ vorgesehen, dass ein Zeitpunkt, zu dem die Zwischen-Beschleunigung eines Fahrzeuges mit dem Soll-Ruck, der zu Beginn dem Start-Ruck entsprechen kann, in Richtung der angeforderten Soll-Beschleunigung angepasst wird, in Abhängigkeit der Position des Fahrzeuges innerhalb des Fahrzeugverbundes festgelegt wird, wobei mit steigender Position innerhalb des Fahrzeugverbundes bei Vorgabe einer positiven Soll-Beschleunigung ein späterer Zeitpunkt und bei Vorgabe einer negativen Soll-Beschleunigung ein früher Zeitpunkt gewählt wird. Dadurch kann unterstützend bewirkt werden, dass die Fahrzeuge während der Beobachtungs- und Bewertungsphase mit einer unterschiedlichen Fahrdynamik angetrieben bzw. abgebremst werden zum Vermeiden eines Auflaufens benachbarter Fahrzeuge.

Vorzugsweise ist weiterhin vorgesehen, dass die Beobachtung der Ist-Fahrdynamik die zeitliche Beobachtung folgender Größen beinhaltet:
- einer Fahrzeug-Ist-Geschwindigkeit des jeweiligen Fahrzeuges und/oder
- einer Ist-Beschleunigung des jeweiligen Fahrzeuges und/oder
- einem Ist-Ruck des jeweiligen Fahrzeuges unter Berücksichtigung einer Ansprechzeit und/oder
- eines Ist-Abstands zwischen zwei Fahrzeugen des Fahrzeugverbundes und/oder
- einer Ist-Abstand-Änderung, d.h. eines Gradienten des Ist-Abstandes zwischen zwei Fahrzeugen des Fahrzeugverbundes.

Die Ansprechzeit gibt dabei an, wie schnell das Bremssystem bzw. das Antriebssystem des jeweiligen Fahrzeuges auf eine Beschleunigungsanforderung reagiert, wobei dies beispielsweise durch eine Zeit zum Druckaufbau etc. abhängt.

Dadurch kann in einfacher Weise erkannt werden, ob das jeweilige Fahrzeug die Soll-Beschleunigung mit dem Soll-Ruck unter Berücksichtigung der Beschleunigungsparameter erreichen kann oder nicht.

Die Bewertung über den Ist-Abstand bzw. die Ist-Abstand-Änderung ist dabei insbesondere in Schlupf-Situationen, d.h. bei einem Bremseingriff oder einem Antriebseingriff, vorteilhaft, da die Messung bzw. Schätzung der Fahrzeug-Ist-Geschwindigkeit bzw. der Ist-Beschleunigung unter Schlupfeinfluss (Bremsschlupf, Antriebsschlupf) fehlerbehaftet ist und daher dem eigentlichen Sicherheitsziel der Kollisionsvermeidung nur indirekt dienlich sein kann. Der Ist-Abstand bzw. die Ist-Abstand-Änderung hingegen stehen in direktem Zusammenhang mit einem potentiellen Kollisionsrisiko und können daher auch in Schlupfsituationen für das Sicherheitsziel dienlich sein. Vorzugsweise kann die Fahrzeug-Ist-Geschwindigkeit bzw. die Ist-Beschleunigung dennoch zur Plausibilisierung und/oder außerhalb von starken Bremseingriffen oder Antriebseingriffen verwendet werden.

Dazu ist vorteilhafterweise vorgesehen, dass das fahrzeugspezifische Bewertungsergebnis hinsichtlich der Frage, ob das jeweilige Fahrzeug seine Ist-Fahrdynamik im Sinne der Beschleunigungsparameter verändert, in Abhängigkeit folgender Kriterien gebildet wird:
- die Fahrzeug-Ist-Geschwindigkeit des jeweiligen Fahrzeuges bleibt konstant und/oder
- die Ist-Beschleunigung des jeweiligen Fahrzeuges bleibt konstant oder nimmt innerhalb einer vorgesehenen Zeit, die sich aus der Totzeit und dem Soll-Ruck ergibt, betragsmäßig ab und/oder
- der Ist-Abstand zwischen zwei Fahrzeugen bleibt konstant und/oder
- die Ist-Abstand-Änderung ist kleiner gleich Null, d.h. der Ist-Abstand nimmt ab.

Vorzugsweise ist weiterhin vorgesehen, dass die Soll-Beschleunigung und/oder die Beschleunigungsparameter für das jeweilige Fahrzeug dezentral in den jeweiligen Fahrzeugen in Abhängigkeit von drahtlos zwischen den Fahrzeugen übermittelten Datensignalen oder zentral in einem der Fahrzeuge festgelegt werden. Damit kann das Verfahren in einem Fahrzeugverbund angewandt werden, das sich zentral, beispielsweise von einem Leitfahrzeug ausgehend, koordiniert oder eine dezentrale Koordination anwendet, bei der die jeweiligen Fahrzeuge selbst in Abhängigkeit von ausgetauschten Datensignalen ihre Fahrdynamik festlegen und anpassen.

Gemäß einer bevorzugten Weiterbildung ist außerdem vorgesehen, dass die Soll-Beschleunigung und/oder der Soll-Ruck für das jeweilige Fahrzeug automatisiert oder manuell vorgegeben wird, insbesondere in Abhängigkeit einer zentralen Beschleunigungsanforderung, beispielsweise einer zentralen Notbremsanforderung (maximaler Geschwindigkeitsabbau des Fahrzeugverbunds ohne interne Kollision). Damit kann mit dem erfindungsgemäßen Verfahren eine homogene Beschleunigungsverteilung über den gesamten Fahrzeugverbund bei einer zentral vorgegebenen Bremsanforderung erreicht werden, wodurch insbesondere bei einer Notbremsanforderung Folgeunfälle im Fahrzeugverbund vermieden und gleichzeitig eine möglichst schnelle Abbremsung des Fahrzeugverbundes in einer Gefahrensituation gewährleistet werden kann.

Dies ist jedoch nicht nur auf eine Notbremsanforderung beschränkt. Auch in anderen fahrdynamischen Grenzsituationen bzw. Notsituationen kann eine Vermeidung von Folgeunfällen im Fahrzeugverbund und gleichzeitig eine möglichst schnelle Abbremsung des Fahrzeugverbundes durch das beschriebene Verfahren gewährleistet werden.

Vorzugsweise ist außerdem vorgesehen, dass während der Umsetzung der Soll-Beschleunigung mit dem Soll-Ruck unter Berücksichtigung der fahrzeugspezifischen Beschleunigungsparameter geprüft wird, ob der Ist-Abstand zwischen den einzelnen Fahrzeugen des Fahrzeugverbundes einen vorgegebenen Soll-Abstand für die jeweiligen Fahrzeuge unterschreitet. Demnach kann dem Verfahren eine Abstandsregelung überlagert werden, um ergänzend zur optimierten Einstellung der Soll-Beschleunigung ein Auflaufen im Bedarfsfall zu vermeiden und das Verfahren damit sicherer zu gestalten.

Erfindungsgemäß ist weiterhin eine Steuereinheit für ein Fahrzeug, das sich in einem Fahrzeugverbund befindet vorgesehen, in der insbesondere das erfindungsgemäße Verfahren ausgeführt werden kann, wobei die Steuereinheit ausgebildet ist,
- die Soll-Beschleunigung im jeweiligen Fahrzeug des Fahrzeugverbundes durch elektrisches Ansteuern des Antriebssystems und/oder des Bremssystems des jeweiligen Fahrzeuges unter Berücksichtigung eines Soll-Rucks bzw. eines Soll-Beschleunigungs-Gradienten und von vorgegebenen fahrzeugspezifischen Beschleunigungsparametern umzusetzen, wobei durch die Beschleunigungsparameter festgelegt ist, wie die angeforderte Soll-Beschleunigung umzusetzen ist;
- eine Ist-Fahrdynamik des jeweiligen Fahrzeuges des Fahrzeugverbundes während der Umsetzung der Soll-Beschleunigung unter Berücksichtigung des Soll-Rucks und der fahrzeugspezifischen Beschleunigungsparameter zu beobachten;
- die beobachtete Ist-Fahrdynamik des jeweiligen Fahrzeuges anhand der angeforderten Soll-Beschleunigung für das jeweilige Fahrzeug unter Berücksichtigung des Soll-Rucks und der fahrzeugspezifischen Beschleunigungsparameter zu beobachten und ein fahrzeugspezifischen Bewertungsergebnis auszugeben;
- einen Beschleunigungs-Grenzwert und/oder einen Ruck-Grenzwert in Abhängigkeit des fahrzeugspezifischen Bewertungsergebnisses zu ermitteln und auszugeben zum Anpassen der fahrzeugspezifischen Beschleunigungsparameter in mindestens einem der Fahrzeuge des Fahrzeugverbundes in Abhängigkeit des ermittelten Beschleunigungs-Grenzwertes und/oder Ruck-Grenzwertes.

Die Beobachtung der Ist-Fahrdynamik erfolgt hierbei vorzugsweise sensorisch, indem die Fahrzeug-Ist-Geschwindigkeit des jeweiligen Fahrzeuges und/oder die Ist-Beschleunigung des jeweiligen Fahrzeuges und/oder der Ist-Abstand zwischen zwei Fahrzeugen des Fahrzeugverbundes und/oder die Ist-Abstand-Änderung, d.h. eines Gradienten des Ist-Abstandes zwischen zwei Fahrzeugen des Fahrzeugverbundes, auf Grundlage von Sensordaten von entsprechenden Sensoren kontinuierlich durch die Steuereinheit erfasst wird.

Die Steuereinheit ist dabei vorzugsweise ferner ausgebildet, ein über eine drahtlose Datenkommunikation zwischen den Fahrzeugen des Fahrzeugverbundes übertragenes Datensignal zu senden und/oder zu empfangen und den ermittelten Beschleunigungs-Grenzwert und/oder Ruck-Grenzwert über das Datensignal an die anderen Fahrzeuge des Fahrzeugverbundes zu übermitteln und/oder einen einem anderen Fahrzeug zugeordneten Beschleunigungs-Grenzwert und/oder Ruck-Grenzwert zu empfangen und die Beschleunigungsparameter in Abhängigkeit davon anzupassen.

Die Erfindung wird im Folgenden anhand eines Ausführungsbeispiels näher erläutert. Es zeigen:
- Fig. 1: eine schematische Ansicht eines Fahrzeugverbundes aus drei Fahrzeugen;
- Fig. 2: ein zeitlicher Verlauf der Fahrdynamik der Fahrzeuge im Fahrzeugverbund gemäß Fig. 1;
- Fig. 3: ein Flussdiagramm des erfindungsgemäßen Verfahrens.

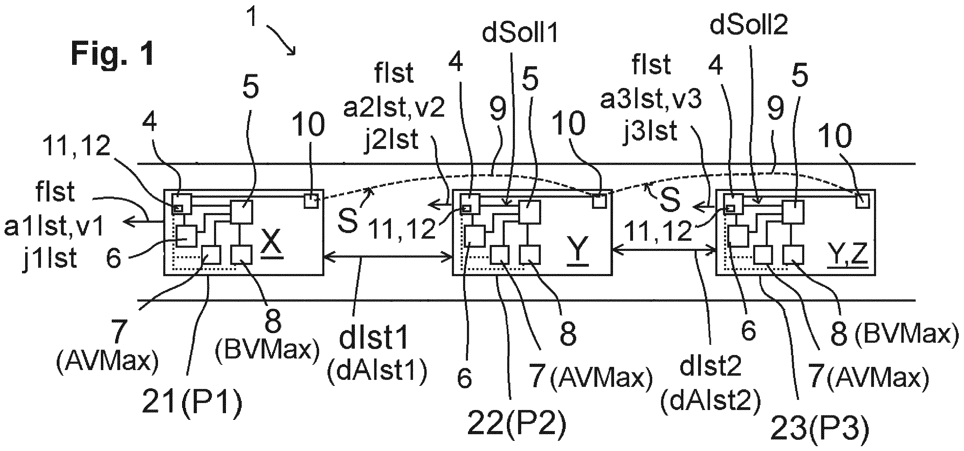

In Figur 1 ist ein Fahrzeugverbund 1 bzw. Platoon aus drei Fahrzeugen 2i, mit i = 1, 2, 3 dargestellt, die sich in einem bestimmten Ist-Folgeabstand dlstj mit j = 1, 2 zueinander bewegen. Das erste Fahrzeug 21 des Fahrzeugverbundes 1 wird als Leitfahrzeug X bezeichnet, während das zweite Fahrzeug 22 und das dritte Fahrzeug 23 Folgefahrzeuge Y des Fahrzeugverbundes 100 sind. Das dritte Fahrzeug 23 wird als letztes Fahrzeug des Fahrzeugverbundes 1 als Abschlussfahrzeug Z bezeichnet.

Die Ist-Folgeabstände dlstj sind im normalen Fahrbetrieb des Fahrzeugverbundes 1 derartig eingestellt, dass diese den heute üblichen Sicherheitsabstand zwischen den einzelnen Fahrzeugen 2i unterschreiten. Dies kann dadurch gerechtfertigt werden, dass die einzelnen Fahrzeuge 2i über eine drahtlose Datenkommunikation 9, insbesondere eine V2X-Kommunikation, miteinander kommunizieren und darüber ihre Fahrt aufeinander abstimmen. Als V2X-Kommunikation (Vehicle-to-Everything) wird dabei im Rahmen der Erfindung eine drahtlose Kommunikationsmöglichkeit bezeichnet, die es den einzelnen Fahrzeugen 2i erlaubt, über ein bestimmtes Interface bzw. gemäß einem bestimmten Protokoll Datensignale S bereitzustellen und zu empfangen, um sich zu koordinieren. Die Datensignale S enthalten hierbei beispielsweise Informationen bzw. Daten über fahrdynamische Eigenschaften der einzelnen Fahrzeuge 2i und/oder relevante Informationen bzw. Daten, die den Fahrzeugverbund 1 betreffen.

Dazu ist in jedem der Fahrzeuge 2i eine V2X-Einheit 10 angeordnet, die in herkömmlicher Weise ein nicht dargestelltes Sende- und Empfangsmodul aufweist, über das die Datensignale S gesendet und empfangen werden können. In Abhängigkeit der ausgetauschten Datensignale S kann nachfolgend die Fahrdynamik der einzelnen Fahrzeuge 2i im Fahrzeugverbund 1 angepasst werden. Dazu wird beispielsweise eine Soll-Beschleunigung aiSoll in Abhängigkeit der Datensignale S vorgegeben und diese im jeweiligen Fahrzeug 2i umgesetzt. Die Soll-Beschleunigung aiSoll kann hierbei positiv oder negativ sein, d.h. es kann eine Steigerung oder eine Verringerung der aktuellen Fahrzeug-Ist-Geschwindigkeit vi des jeweiligen Fahrzeuges 2i in Abhängigkeit des Datensignals S bewirkt werden. Die Soll-Beschleunigung aiSoll wird hierbei unter Berücksichtigung eines Soll-Rucks jiSoll, d.h. einem Gradienten der Soll-Beschleunigung aiSoll, im jeweiligen Fahrzeug 2i umgesetzt.

Jedes Fahrzeug 2i weist im gezeigten Ausführungsbeispiel ein Abstandsregelsystem 5 auf, das ausgebildet ist, in Abhängigkeit von Daten eines internen Umgebungserfassungssystems 6 den aktuell vorliegenden Ist-Folgeabstand dlstj zu erfassen und diesen auf einen vorgegebenen Soll-Folgeabstand dSollj einzuregeln, wobei dies im gezeigten Fahrzeugverbund 1 lediglich für die Folgefahrzeuge 22, 23 (Y) relevant ist. Das Abstandsregelsystem 5 ist dazu mit einem elektrisch steuerbaren Antriebssystem 7 und einem elektrisch steuerbaren Bremssystem 8 signalleitend verbunden, um das jeweilige Fahrzeug 2i positiv beschleunigen oder verzögern zu können und so den vorgegebenen Soll-Folgeabstand dSollj einzustellen.

Die Vorgabe des Soll-Folgeabstandes dSollj erfolgt im Normalbetrieb des Fahrzeugverbundes 1 über eine Steuereinheit 4 im jeweiligen Fahrzeug 2i. Die Steuereinheit 4 ist mit der V2X-Einheit 10 signalleitend verbunden oder in diese integriert und kann daher auf die Informationen und Daten aus dem Datensignal S zurückgreifen. In Abhängigkeit des Datensignals S wird der Soll-Folgeabstand dSollj, der auf die aktuelle Fahrsituation des Fahrzeugverbundes 1 abgestimmt ist, von der Steuereinheit 4 vorgegeben. Der Soll-Folgeabstand dSollj kann beispielsweise zentral ermittelt bzw. festgelegt und in dem Datensignal S über die drahtlose Datenkommunikation 9 an die einzelnen Fahrzeuge 2i des Fahrzeugverbundes 1 übertragen werden. Die Steuereinheit 4 leitet den Soll-Folgeabstand dSollj dann innerhalb des Fahrzeuges 2i lediglich weiter. Die Steuereinheit 4 kann den Soll-Folgeabstand dSollj aber auch selbst (dezentral) für das eigene Fahrzeug 2i anhand der über das Datensignal S übertragenen Informationen und Daten herleiten.

Der Soll-Folgeabstand dSollj wird anschließend von der Steuereinheit 4 an das Abstandsregelsystem 5 übertragen. Das Abstandsregelsystem 5 erzeugt daraufhin in Abhängigkeit des ermittelten Soll-Folgeabstandes dSollj sowie des aktuell vorliegenden Ist-Folgeabstandes dlstj eine Soll-Beschleunigung aiSoll, die über das Antriebssystem 7 bzw. das Bremssystem 8 des jeweiligen Fahrzeuges 2i mit einem bestimmten Soll-Ruck jiSoll entsprechend umgesetzt wird. Die Ermittlung der Soll-Beschleunigung aiSoll erfolgt damit im Abstandsregelsystem 5 in Abhängigkeit des Datensignals S bzw. der darin enthaltenen Informationen und Daten.

Eine Soll-Beschleunigung aiSoll für das jeweilige Fahrzeug 2i kann hierbei nicht nur von dem Abstandsregelsystem 5 vorgegeben werden. Vielmehr kann die Soll-Beschleunigung aiSoll auch direkt von der Steuereinheit 4 und/oder von weiteren Fahrerassistenzsystemen 11 im jeweiligen Fahrzeug 2i festgelegt bzw. ausgegeben werden, die dann das Antriebssystem 7 bzw. das Bremssystem 8 mittelbar oder unmittelbar in Abhängigkeit davon elektrisch ansteuern, um die Soll-Beschleunigung aiSoll im Fahrzeug 2i umzusetzen. Es kann auch eine zentral festgelegte Soll-Beschleunigung aiSoll über die drahtlose Datenkommunikation 9 an das jeweilige Fahrzeug 2i übermittelt und von der Steuereinheit 4 unmittelbar oder mittelbar, z.B. über das Abstandsregelsystem 5, an das Antriebssystem 7 bzw. das Bremssystem 8 ausgegeben werden.

Beispielsweise kann von einem der Fahrzeuge 2i des Fahrzeugverbundes 1 bei Erkennen einer Gefahrensituation, beispielsweise durch ein vorrausschauendes Notbremssystem 12 (AEBS, Advanced Emergency Braking System), eine Notbremsanforderung zNSoll zur Umsetzung in allen Fahrzeugen 2i des Fahrzeugverbundes 1 erzeugt werden. Diese Notbremsanforderung zNSoll wird als (negative) Soll-Beschleunigung aiSoll über die drahtlose Datenkommunikation 9 an die einzelnen Fahrzeuge 2i des Fahrzeugverbundes 1 übertragen und darin von der jeweiligen Steuereinheit 4 empfangen und an das Bremssystem 8 zur Umsetzung übermittelt. Die Soll-Beschleunigung aiSoll kann aber auch anderweitig automatisiert vorgegeben werden, wobei sich das erfindungsgemäße Verfahren insbesondere bei Bremsvorgaben in fahrdynamischen Grenzsituationen auszeichnet, da damit eine Vermeidung von Folgeunfällen im Fahrzeugverbund 1 und gleichzeitig eine möglichst schnelle Abbremsung des Fahrzeugverbundes 1 gewährleistet werden kann.

Die Soll-Beschleunigung aiSoll kann aber auch manuell vom Fahrer, beispielsweise durch Betätigen eines Betätigungsorgans bei Erkennen einer Gefahrensituation o.ä., vorgegeben und über die Steuereinheit 4 umgesetzt und gleichzeitig an die anderen Fahrzeuge 2i des Fahrzeugverbundes 1 mitgeteilt werden.

Die Steuereinheit 4 ist erfindungsgemäß weiterhin ausgebildet, fahrzeugspezifische Beschleunigungsparameter Bi festzulegen, mit denen das Antriebssystem 7 und/oder das Bremssystem 8 des jeweiligen Fahrzeuges 2i eine beliebig vorgegebene Soll-Beschleunigung aiSoll während einer Fahrt im Fahrzeugverbund 1 unter Berücksichtigung des Soll-Rucks jiSoll umsetzt. Die Beschleunigungsparameter Bi werden dabei vorzugsweise bei der Umsetzung jeglicher Soll-Beschleunigungen aiSoll (Abstandsregelsystem 5, Steuereinheit 4, Fahrerassistenzsystem 11, vorrausschauendes Notbremssystem 12 (zNSoll)) angewandt, wobei dies beispielsweise durch eine entsprechende Übermittlung der Beschleunigungsparameter Bi an das elektronisch steuerbare Antriebssystem 7 bzw. Bremssystem 8 erfolgt.

Als Beschleunigungsparameter Bi können fahrzeugspezifisch beispielsweise eine Start-Beschleunigung aiStart und/oder eine Maximal-Beschleunigung aiMax und/oder ein Start-Ruck jiStart und/oder ein Maximal-Ruck jiMax vorgegeben werden. Wird eine bestimmte Soll-Beschleunigung aiSoll angefordert, so wird das jeweilige Fahrzeug 2i zunächst mit einer Zwischen-Beschleunigung aiZ, die durch die vorgegebene Start-Beschleunigung aiStart festgelegt ist, positiv oder negativ beschleunigt. Die Start-Beschleunigung aiStart ist im Normalfall betragsmäßig geringer als die Soll-Beschleunigung aiSoll und weist einen Wert auf, der jedes Fahrzeug 2i normalerweise im Stande ist zu leisten.

Ausgehend davon gibt der Start-Ruck jiStart an, wie die Zwischen-Beschleunigung aiZ ausgehend von der Start-Beschleunigung aiStart über die Zeit betragsmäßig zu erhöhen ist, um die Zwischen-Beschleunigung aiZ an die angeforderte Soll-Beschleunigung aiSoll anzunähern. Damit wird als Soll-Ruck jiSoll zunächst der Start-Ruck jiStart festgelegt.

Die Maximal-Beschleunigung aiMax gibt eine zusätzliche Begrenzung an, die die Zwischen-Beschleunigung aiZ betragsmäßig nicht überschreiten darf. Die Maximal-Beschleunigung aiMax kann unter Umständen betragsmäßig geringer sein als die angeforderte Soll-Beschleunigung aiSoll. Der Maximal-Ruck jiMax gibt weiterhin eine Begrenzung des Soll-Rucks jiSoll an, der betragsmäßig nicht zu überschreiten ist. Die Maximal-Beschleunigung aiMax und/oder der Maximal-Ruck jiMax können beispielsweise aus dem maximalen Antriebsvermögen AVMax bzw. dem maximalen Bremsvermögen BVMax, die durch das Antriebssystem 7 bzw. das Bremssystem 8 des jeweiligen Fahrzeuges 2i geleistet werden können, folgen. Die Maximal-Beschleunigung aiMax und/oder der Maximal-Ruck jiMax können der Steuereinheit 4 des jeweiligen Fahrzeuges 2i aber auch vorgegeben werden, beispielsweise über die V2X-Einheit 10.

Auch die Start-Beschleunigung aiStart und der Start-Ruck jiStart können der Steuereinheit 4 von der V2X-Einheit 10 vorgegeben werden, woraufhin die Steuereinheit 4 diese im eigenen Fahrzeug 2i zur Umsetzung einer vorliegenden Soll-Beschleunigung aiSoll mit dem Soll-Ruck jiSoll festlegt.

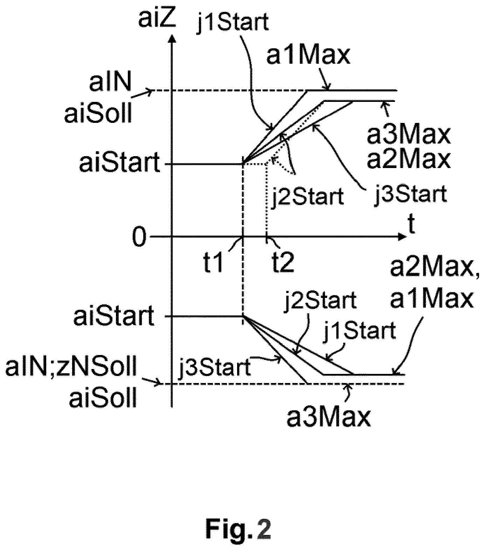

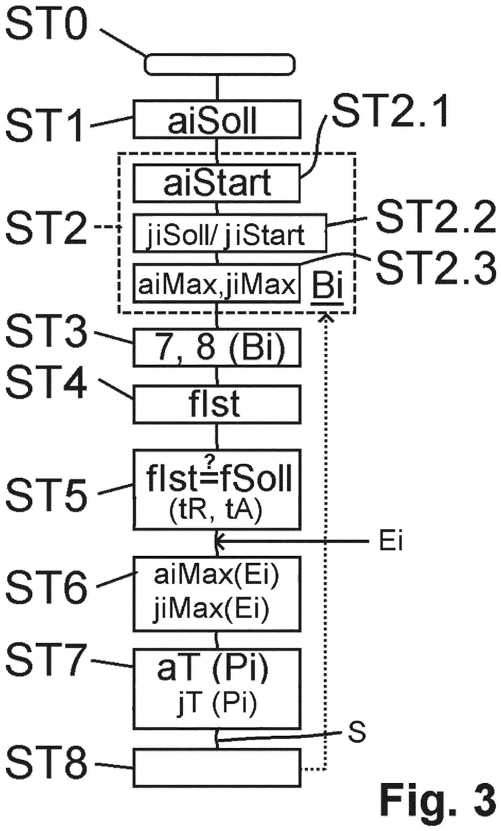

Die Festlegung von fahrzeugspezifischen Beschleunigungsparametern Bi ermöglicht ein gezieltes Koordinieren der Fahrzeuge 2i des Fahrzeugverbundes 1, was anhand der Figuren 2 und 3 im Folgenden näher erläutert wird:
Nach einer Initialisierung der Steuereinheiten 4 in den Fahrzeugen 2i des Fahrzeugverbundes 1 in einem anfänglichen Schritt STO (Fig. 3), beispielsweise beim Starten des Fahrzeuges 2i oder beim Eintritt in einen Fahrzeugverbund 1, wird in einem ersten Schritt ST1 eine beliebig angeforderte Soll-Beschleunigung aiSoll für das jeweilige Fahrzeug 2i erfasst bzw. eingelesen.

Um den gesamten Fahrzeugverbund 1 in sicherer Art und Weise gemäß der Soll-Beschleunigung aiSoll positiv oder negativ zu beschleunigen und die einzelnen Fahrzeuge 2i dabei optimal im Rahmen ihrer Leistungsfähigkeit aufeinander abzustimmen, werden in einem zweiten Schritt ST2 die fahrzeugspezifischen Beschleunigungsparameter Bi für jedes einzelne Fahrzeug 2i festgelegt. Die Festlegung erfolgt entweder zentral in einem der Fahrzeuge 2i des Fahrzeugverbundes 1 mit anschließender Übermittlung an die einzelnen Fahrzeuge 2i über die drahtlose Datenkommunikation 9 oder zumindest teilweise dezentral in jedem Fahrzeug 2i separat, wobei übermittelte Datensignale S berücksichtigt werden.

In einem ersten Zwischenschritt ST2.1 wird dazu eine geeignete Start-Beschleunigung aiStart vorgegeben, von der angenommen wird, dass diese von jedem der Fahrzeuge 2i des Fahrzeugverbundes 1 zu leisten ist. In einem zweiten Zwischenschritt ST2.2 erfolgt die Festlegung des Start-Rucks jiStart als Soll-Ruck jiSoll, wobei jedem Fahrzeug 2i ein individueller Start-Ruck jiStart als Soll-Ruck jiSoll zugeordnet wird. Der Start-Ruck jiStart wird insbesondere in Abhängigkeit einer Position Pi des jeweiligen Fahrzeuges 2i innerhalb des Fahrzeugverbundes 1 festgelegt. In einem dritten Zwischenschritt ST2.3 erfolgt die Festlegung der Maximal-Beschleunigung aiMax und/oder des Maximal-Rucks jiMax für das jeweilige Fahrzeug 2i, beispielsweise in Abhängigkeit des maximal möglichen Antriebsvermögens AVMax bzw. Bremsvermögens BVMax des jeweiligen Fahrzeuges 2i. Ist die Maximal-Beschleunigung aiMax bzw. der Maximal-Ruck jiMax zu diesem Zeitpunkt noch nicht bekannt oder kann nicht festgestellt werden, wird diese zunächst offengelassen oder auf einen betragsmäßig hohen Wert festgelegt, beispielsweise auf die aktuell vorgegebene Soll-Beschleunigung aiSoll.

Wie in Fig. 2 dargestellt, erfolgt die Festlegung des Start-Rucks jiStart als Soll-Ruck jiSoll in Abhängigkeit der Position Pi des jeweiligen Fahrzeuges 2i innerhalb des Fahrzeugverbundes 1 derartig, dass der Start-Gradient jiStart
- bei positiver Soll-Beschleunigung aiSoll mit ansteigender Position Pi abfällt, und
- bei negativer Soll-Beschleunigung aiSoll mit ansteigender Position Pi betragsmäßig ansteigt (also ebenfalls abfällt).

Demnach wird die erste Zwischen-Beschleunigung a1Z des ersten Fahrzeuges 1 an der ersten Position P1 des Fahrzeugverbundes 1 bei einer angeforderten Erhöhung der Fahrzeug-Ist-Geschwindigkeit vi (aiSoll positiv) entlang einer steileren Rampe (jiStart) erhöht als die dritte Zwischen-Beschleunigung a3Z des dritten Fahrzeuges 3 an der dritten Position P3 des Fahrzeugverbundes 1. Entsprechend wird die dritte Zwischen-Beschleunigung a3Z des dritten Fahrzeuges 3 an der dritten Position P3 bei einer angeforderten Verringerung der Fahrzeug-Ist-Geschwindigkeit vi (aiSoll negativ) entlang einer steileren Rampe (jiStart) betragsmäßig erhöht als die erste Zwischen-Beschleunigung a1Z des ersten Fahrzeuges 1 an der ersten Position P1.

Dem liegt der erfindungsgemäße Gedanke zugrunde, ein weiter hinten fahrendes Fahrzeug 2i innerhalb des Fahrzeugverbundes 1 weniger stark positiv zu beschleunigen bzw. stärker negativ zu beschleunigen bzw. zu verzögern als ein weiter vorn fahrendes Fahrzeug 2i, um in der jeweiligen Fahrsituation ein Zusammenstoß der Fahrzeuge 2i zu verhindern. Dies wird gerade dadurch erreicht, dass das weiter hinten fahrende Fahrzeug 2i seine Zwischen-Beschleunigung aiZ ausgehend von der Start-Beschleunigung aiStart weniger stark erhöht bzw. stärker verringert als das bzw. die davor fahrenden Fahrzeuge 2i.

Gemäß dem gezeigten Ausführungsbeispiel in Fig. 2 wird die Zwischen-Beschleunigung aiZ ausgehend von der Start-Beschleunigung aiStart für alle Fahrzeuge 2i zu einem ersten Zeitpunkt t1 mit unterschiedlichen Werten für den Start-Ruck jiStart erhöht bzw. verringert. Alternativ oder ergänzend zu einer derartigen Festlegung unterschiedlicher Werte für den Start-Ruck jiStart in Abhängigkeit der Position Pi des jeweiligen Fahrzeuges 2i können auch die Zeitpunkte t, zu denen das jeweilige Fahrzeug 2i seine Zwischen-Beschleunigung aiZ ausgehend von der Start-Beschleunigung aiStart mit dem jeweiligen Start-Ruck jiStart anpasst, in Abhängigkeit der Position Pi variieren. Demnach kann zu dem ersten Zeitpunkt t1 lediglich die Zwischen-Beschleunigung a1Z, a3Z für das erste Fahrzeug 21 (wenn aiSoll positiv) oder das dritte Fahrzeug 23 (wenn aiSoll negativ) mit einem bestimmten Start-Ruck j1Start, j3Start angepasst werden. Zu einem nachfolgenden zweiten Zeitpunkt t2 wird dann die Zwischen-Beschleunigung a2Z für das zweite Fahrzeug 22 angepasst, wobei die Anpassung mit demselben Start-Ruck j2Start erfolgt (punktiert in Fig. 2) wie für das erste Fahrzeug 21. Auch dadurch wird erreicht, dass hintereinanderfahrende Fahrzeuge 2i des Fahrzeugverbundes 1 fortlaufend mit unterschiedlichen Zwischen-Beschleunigungen aiZ abgebremst werden und damit nicht aufeinander auflaufen können. Bevorzugt ist jedoch die Auswahl von unterschiedlichen Start-Rucken jiStart in Abhängigkeit der Position Pi und ein gleichzeitiges (t1) Erhöhen der Zwischen-Beschleunigung aiZ für jedes Fahrzeug 2i vorgesehen, um die Zeitdauer zum Erreichen der angeforderten Soll-Beschleunigung aiSoll für den gesamten Fahrzeugverbund 1 zu verkürzen, was insbesondere in Notbremssituationen sowie anderen fahrdynamischen Grenzsituationen entscheidend ist.

In einem dritten Schritt ST3 werden die bisher festgelegten Beschleunigungsparameter Bi direkt oder indirekt dazu verwendet, die im ersten Schritt ST1 vorgegebene Soll-Beschleunigung aiSoll unter Berücksichtigung des Soll-Rucks jiSoll über das Antriebssystem 7 bzw. das Bremssystem 8 des jeweiligen Fahrzeugs 2i umzusetzen. Dem jeweiligen Fahrzeug 2i werden somit Regeln auferlegt, wie es eine vorgegebene Soll-Beschleunigung aiSoll umzusetzen hat.

In einem vierten Schritt ST4 wird das fahrdynamische Verhalten (Ist-Fahrdynamik flst) der Fahrzeuge 2i des Fahrzeugverbundes 1 während einer Umsetzung der Soll-Beschleunigung aiSoll unter Verwendung der Beschleunigungsparameter Bi und unter Berücksichtigung des Soll-Rucks jiSoll beobachtet. Dies kann beispielsweise dadurch erfolgen, dass eine vorliegende Ist-Beschleunigung ailst und/oder die Fahrzeug-Ist-Geschwindigkeit vi und/oder ein Ist-Ruck jilst des jeweiligen Fahrzeuges 2i ermittelt werden. Diese Beobachtung kann dezentral in jedem der Fahrzeuge 2i erfolgen oder aber zentral in einem der Fahrzeuge 2i, indem die Ist-Beschleunigung ailst und/oder die Fahrzeug-Ist-Geschwindigkeit vi zeitlich aufgelöst über die Datensignale S drahtlos zwischen den Fahrzeugen 2i übertragen wird.

Alternativ kann auch der Ist-Abstand dlstj zwischen den einzelnen Fahrzeugen 2i und/oder eine Ist-Abstand-Änderung dAlstj zeitlich aufgelöst betrachtet werden, um die Ist-Fahrdynamik flst eines Fahrzeuges 2i zu beobachten. Demnach kann festgestellt werden, beispielsweise sensorisch, wie schnell sich zwei Fahrzeuge 2i aneinander annähern oder voneinander entfernen.

In einem fünften Schritt ST5 wird die beobachtete Ist-Fahrdynamik flst (ailst, vi, dlstj, dAlstj, jilst) mit einer Soll-Fahrdynamik fSoll verglichen, wobei die Soll-Fahrdynamik fSoll durch die Soll-Beschleunigung aiSoll unter Berücksichtigung des Soll-Rucks jiSoll und der Beschleunigungsparameter Bi angegeben wird. In Abhängigkeit dieses Vergleiches wird ein fahrzeugspezifisches Bewertungsergebnis Ei ausgegeben, das angibt, ob das jeweilige Fahrzeug 2i imstande ist, die Zwischen-Beschleunigung aiZ unter Berücksichtigung des Soll-Rucks jiSoll und der Beschleunigungsparameter Bi anzupassen und die Soll-Beschleunigung aiSoll in dieser Weise zu erreichen.

Wird für ein Fahrzeug 2i des Fahrzeugverbundes 1 beispielsweise festgestellt, dass
- sich die Ist-Beschleunigung ailst betragsmäßig nicht weiter erhöht und gleichzeitig die Soll-Beschleunigung aiSoll noch nicht erreicht ist oder
- die Ist-Beschleunigung ailst innerhalb eines vorgegebenen Zeitraums tR betragsmäßig abnimmt, wobei der vorgegebene Zeitraum tR abhängig von dem Soll-Ruck jiSoll unter Berücksichtigung einer Ansprechzeit tA ist, oder
- sich der Ist-Abstand dlstj nicht gemäß der vorgegebenen Soll-Fahrdynamik fSoll der beiden im Ist-Abstand dlstj fahrenden Fahrzeuge 2i verhält bzw. sich die Ist-Abstand-Änderung dAlstj nicht dem erwarteten Verhalten (Abnahme oder Zunahme) entspricht,
wird ein Bewertungsergebnis Ei für das jeweilige Fahrzeug 2i ausgegeben, das angibt, dass das jeweilige Fahrzeug 2i nicht imstande ist, die Zwischen-Beschleunigung aiZ unter Berücksichtigung des Soll-Rucks jiSoll und der Beschleunigungsparameter Bi anzupassen und die Soll-Beschleunigung aiSoll in dieser Weise zu erreichen.

Daraufhin wird in einem sechsten Schritt ST6 die aktuell vorliegende Ist-Beschleunigung ailst als Maximal-Beschleunigung aiMax und/oder der vorliegende Ist-Ruck jilst als Maximal-Ruck jiMax für das jeweilige Fahrzeug 2i festgelegt. Damit wird der im dritten Zwischenschritt 2.3 zwischenzeitlich angenommene Wert für die Maximal-Beschleunigung aiMax und/oder den Maximal-Ruck jiMax bestätigt, überschrieben oder ergänzt. Diese Maximal-Beschleunigung aiMax bzw. dieser Maximal-Ruck jiMax wird anschließend in einem siebenten Schritt ST7 als Beschleunigungs-Grenzwert aT bzw. Ruck-Grenzwert jT über das Datensignal S auf die anderen Fahrzeuge 2i des Fahrzeugverbundes 1 übertragen. Dem Beschleunigungs-Grenzwert aT bzw. dem Ruck-Grenzwert jT kann dabei im Datensignal S auch das jeweilige Fahrzeug 2i bzw. dessen Position Pi zugeordnet werden.

In einem achten Schritt ST8 wird der übertragene Beschleunigungs-Grenzwert aT bzw. der Ruck-Grenzwert jT als Beschleunigungsparameter Bi bzw. als Maximal-Beschleunigung aiMax bzw. Maximal-Ruck jiMax für die anderen Fahrzeuge 2i des Fahrzeugverbundes 1 verwendet. Damit werden die Maximal-Beschleunigungen aiMax bzw. Maximal-Rucke jiMax aller Fahrzeuge 2i des Fahrzeugverbundes 1 einheitlich auf den vorher ermittelten Beschleunigungs-Grenzwert aT bzw. Ruck-Grenzwert jT festgelegt. Alternativ kann auch vorgesehen sein, dass der übertragene Beschleunigungs-Grenzwert aT bzw. Ruck-Grenzwert jT lediglich bei den Fahrzeugen 2i als Maximal-Beschleunigung aiMax bzw. Maximal-Ruck jiMax verwendet wird, die
- bei einer positiven Soll-Beschleunigung aiSoll hinter dem dem Beschleunigungs-Grenzwert aT bzw. Ruck-Grenzwert jT zugeordneten Fahrzeug 2i fahren, und
- bei einer negativen Soll-Beschleunigung aiSoll vor dem dem Beschleunigungs-Grenzwert aT bzw. Ruck-Grenzwert jT zugeordneten Fahrzeug 2i fahren. Dazu kann die dem Beschleunigungs-Grenzwert aT bzw. Ruck-Grenzwert jT zugeordnete Position Pi des jeweiligen Fahrzeuges 2i berücksichtigt werden.

In dieser Art und Weise kann beim Anpassen der jeweiligen Zwischen-Beschleunigung aiZ gemäß dem Soll-Ruck jiSoll für jedes Fahrzeug 2i sukzessive festgestellt werden, welche Maximal-Beschleunigung aiMax bzw. welcher Maximal-Ruck jiMax einschlägig ist und ob die Fahrdynamik der weiteren Fahrzeuge 2i des Fahrzeugverbundes 1 daran anzupassen ist, um ein Auflaufen der Fahrzeuge 2i in der jeweiligen Fahrsituation zu vermeiden.

Dies ist in Fig. 2 beispielhaft dargestellt. Demnach wird bei einer Bremssituation für das dritte Fahrzeug 3 an der dritten Position P3 des Fahrzeugverbundes 1 die angeforderte Soll-Beschleunigung aiSoll erreicht, wobei die Maximal-Beschleunigung aiMax für das dritte Fahrzeug 3 entweder der Soll-Beschleunigung aiSoll entspricht oder diese noch nicht erreicht wurde. Für das zweite Fahrzeug 2 erreicht die Zwischenbeschleunigung aiZ ab einem bestimmten Zeitpunkt die zweite Maximal-Beschleunigung a2Max, beispielsweise weil das maximale Bremsvermögen BVMax für das zweite Fahrzeug 2 erreicht ist. Die zweite Maximal-Beschleunigung a2Max ist dabei geringer als die angeforderte Soll-Beschleunigung a2Soll. Dies hat auch Auswirkungen auf das erste Fahrzeug 1 an der ersten Position P1, das demnach auch maximal mit der zweiten Maximal-Beschleunigung a2Max abzubremsen ist, um ein Auflaufen des zweiten Fahrzeuges 2 auf das erste Fahrzeug 1 zu vermeiden. Dementsprechend wird die zweite Maximal-Beschleunigung a2Max als Beschleunigungs-Grenzwert aT mit der Zuordnung zum zweiten Fahrzeug 2 (zweite Position P2) über die drahtlose Datenkommunikation insbesondere an das erste Fahrzeug 1 übertragen. In diesem wird der Beschleunigungs-Grenzwert aT als einer der Beschleunigungsparameter B1 dazu verwendet, die erste Maximal-Beschleunigung a1 Max festzulegen, so dass auch das erste Fahrzeug 1 mit maximal der ersten bzw. zweiten Maximal-Beschleunigung a1 Max (= a2Max) abbremst, um die angeforderte Soll-Beschleunigung a1 Soll umzusetzen. Da die umgesetzte Beschleunigung vom ersten Fahrzeug 1 der umgesetzten Beschleunigung vom zweiten Fahrzeug 2 während des Bremsvorgangs zeitlich nachläuft, kann durch eine Echtzeitübertragung der gerade ermittelten zweiten Maximal-Beschleunigung a2Max des zweiten Fahrzeugs 2 erreicht werden, dass das erste Fahrzeug 1 noch während des Bremsvorgangs auf die gerade erreichte Limitierung des zweiten Fahrzeuges 2, d.h. a2Max, reagiert. Dadurch kann gerade eine verbesserte Unfallvermeidung innerhalb des Fahrzeugverbundes 1 erreicht werden.

In vergleichbarer Weise gilt dies für den ebenfalls in Fig. 2 dargestellten Fall einer (positiven) Beschleunigungssituation. Entsprechendes gilt bei einer Feststellung eines bestimmten Ruck-Grenzwertes jT, der auf die jeweiligen Fahrzeuge 2i übertragen wird, so dass dessen Fahrverhalten in positiven oder negativen Beschleunigungssituationen dadurch festlegt wird.

Daher kann mit dem erfindungsgemäßen Verfahren über den gesamten Fahrzeugverbund 1 eine optimierte und homogenisierte Festlegung der Maximal-Beschleunigungen aiMax und/oder der Maximal-Rucke jiMax erfolgen, so dass in der jeweiligen Fahrsituation ein Auflaufen der einzelnen Fahrzeuge 2i aufeinander innerhalb des Fahrzeugverbundes 1 vermieden werden kann. Bei einer (positiven) Beschleunigungssituation kann dies insbesondere dann der Fall sein, wenn keine Abstandsregelung vorhanden oder aktiv ist und die einzelnen Fahrzeuge 2i demnach bei Vorliegen einer positiven Soll-Beschleunigung aiSoll aufeinander auflaufend könnten, wenn diese unabhängig voneinander mit ihrem jeweiligen ggf. unbekannten maximalen Antriebsvermögen AVMax ihre Ist-Geschwindigkeit vi anpassen.

### Bezugszeichenliste (Teil der Beschreibung)

- 1: Fahrzeugverbund (Platoon)
- 2i: i-tes Fahrzeug des Fahrzeugverbundes
- 4: Steuereinheit
- 5: Abstandsregelsystem
- 6: internes Umgebungserfassungssystem
- 7: Antriebssystem
- 8: Bremssystem
- 9: drahtlose Datenkommunikation (V2X)
- 10: V2X-Einheit
- 11: Fahrerassistenzsystem
- 12: vorrausschauendes Notbremssystem (AEBS)
- ailst: Ist-Beschleunigung
- aiMax: Maximal-Beschleunigung
- aiSoll: Soll-Beschleunigung
- aiStart: Start-Beschleunigung
- aiZ: Zwischen-Beschleunigung
- aIN: zentrale Beschleunigungsanforderung
- aT: Beschleunigungs-Grenzwert
- AVMax: maximales Antriebsvermögen
- Bi: fahrzeugspezifische Beschleunigungsparameter
- BVMax: maximales Bremsvermögen
- dlstj: Ist-Folgeabstand
- dAlstj: Ist-Folgeabstand-Änderung
- dSollj: Soll-Folgeabstand
- Ei: Bewertungsergebnis
- flst: Ist-Fahrdynamik
- fSoll: Soll-Fahrdynamik
- jilst: Ist-Ruck
- jiMax: Maximal-Ruck
- jiSoll: Soll-Ruck
- jiStart: Start-Ruck
- jiT: Ruck-Grenzwert
- Pi: Position des i-ten Fahrzeuges 2i im Fahrzeugverbund 1
- zNSoll: Notbremsanforderung
- S: Datensignal
- t, t1, t2: Zeitpunkte
- tA: Ansprechzeit
- vi: Fahrzeug-Ist-Geschwindigkeit
- X: Leitfahrzeug
- Y: Folgefahrzeug
- Z: Abschlussfahrzeug
ST0, ST1, ST2, ST2.1, ST2.2, ST2.3, ST3, ST4, ST5, ST6, ST7, ST8

## Patentansprüche

1. Verfahren zum Koordinieren von Fahrzeugen (2i) eines Fahrzeugverbundes (1), wobei die Fahrzeuge (2i) jeweils ein elektronisch steuerbares Antriebssystem (7) und/oder ein elektronisch steuerbares Bremssystem (8) aufweisen zur Umsetzung einer fahrzeugspezifisch angeforderten Soll-Beschleunigung (aiSoll), **dadurch gekennzeichnet, dass** zur Umsetzung der Soll-Beschleunigung (aiSoll) ein Soll-Ruck (jiSoll) bestimmt wird, der festlegt, wie die Beschleunigung ausgehend von einer Startbeschleunigung (aiStart) über die Zeit zu erhöhen ist, um die Beschleunigung an die Sollbeschleunigung (aiSoll) anzunähern und jedem Fahrzeug (2i) eine Position (Pi) im Fahrzeugverbund (1) zugeordnet ist, mit mindestens den folgenden Schritten:
- Umsetzen der fahrzeugspezifisch angeforderten Soll-Beschleunigung (aiSoll) in jedem Fahrzeug (2i) des Fahrzeugverbundes (1) durch elektrisches Ansteuern des Antriebssystems (7) und/oder des Bremssystems (8) des jeweiligen Fahrzeuges (2i) mit dem Soll-Ruck (jiSoll), wobei der Soll-Ruck (jiSoll) von vorgegebenen fahrzeugspezifischen Beschleunigungsparametern (Bi) festgelegt wird, wobei als fahrzeugspezifische Beschleunigungsparameter (Bi) die Start-Beschleunigung (aiStart) mit einem Beschleunigungs-Grenzwert (aiMax) und/oder einem Start-Ruck (jiStart) und/oder einem Ruck-Grenzwert (jiMax) vorgegeben werden, um die angeforderte Soll-Beschleunigung (aiSoll) umzusetzen;
- Beobachten einer Ist-Fahrdynamik (fist) der Fahrzeuge (2i) des Fahrzeugverbundes (1) während der Umsetzung der Soll-Beschleunigung (aiSoll) (ST4);
- Bewerten der beobachteten Ist-Fahrdynamik (fist) der Fahrzeuge (2i) anhand der angeforderten Soll-Beschleunigung (aiSoll) für das jeweilige Fahrzeug (2i) und Ausgeben eines fahrzeugspezifischen Bewertungsergebnisses (Ei) (ST5);
- Ermitteln und Ausgeben des fahrzeugspezifischen Beschleunigungs-Grenzwertes (aiMax) und/oder des fahrzeugspezifischen Ruck-Grenzwertes (jiMax) in Abhängigkeit des fahrzeugspezifischen Bewertungsergebnisses (Ei) (ST6) und Anpassen der fahrzeugspezifischen Beschleunigungsparameter (Bi) in mindestens einem der Fahrzeuge (2i) des Fahrzeugverbundes (1) (ST7, ST8) zum Umsetzen der Soll-Beschleunigung (aiSoll) mit den angepassten fahrzeugspezifischen Beschleunigungsparametern (Bi).

2. Verfahren nach Anspruch 1, **dadurch gekennzeichnet, dass** das Bewerten der beobachteten Ist-Fahrdynamik (fist) ein Vergleichen der Ist-Fahrdynamik (fist) mit einer Soll-Fahrdynamik (fSoll) für das jeweilige Fahrzeug (2i) beinhaltet zum Ermitteln, ob das jeweilige Fahrzeug (2i) imstande ist, die Soll-Fahrdynamik (fSoll) zu erreichen, wobei die Soll-Fahrdynamik (fSoll) vorzugsweise durch die Soll-Beschleunigung (aiSoll) unter Berücksichtigung des Soll-Rucks (jiSoll) und der Beschleunigungsparameter (Bi) angegeben wird.

3. Verfahren nach einem der vorhergehenden Ansprüche, **dadurch gekennzeichnet, dass** als Beschleunigungsparameter (Bi) eine Maximal-Beschleunigung (aiMax) und/oder ein Maximal-Ruck (jiMax) festgelegt werden zum Begrenzen einer aktuell angeforderten Zwischen-Beschleunigung (aiZ) und/oder des Soll-Rucks (jiSoll) beim Umsetzen der angeforderten Soll-Beschleunigung (aiSoll) unter Berücksichtigung der fahrzeugspezifischen Beschleunigungsparameter (Bi).

4. Verfahren nach Anspruch 3, **dadurch gekennzeichnet, dass** die Maximal-Beschleunigung (aiMax) und/oder der Maximal-Ruck (jiMax) in Abhängigkeit des ermittelten Beschleunigungs-Grenzwertes (aT) und/oder des Ruck-Grenzwertes (jT) angepasst werden.

5. Verfahren nach Anspruch 4, **dadurch gekennzeichnet, dass** die Maximal-Beschleunigung (aiMax) in Abhängigkeit des ermittelten Beschleunigungs-Grenzwertes (aT) und/oder der Maximal-Ruck (jiMax) in Abhängigkeit des ermittelten Ruck-Grenzwertes (jT) nur für die Fahrzeuge (2i) des Fahrzeugverbundes (1) angepasst werden, die
- bei einer Vorgabe einer positiven Soll-Beschleunigung (aiSoll) hinter dem dem Beschleunigungs-Grenzwert (aT) und/oder dem Ruck-Grenzwert (jT) zugeordneten Fahrzeug (2i) fahren, und
- bei einer Vorgabe einer negativen Soll-Beschleunigung (aiSoll) vor dem dem Beschleunigungs-Grenzwert (aT) und/oder dem Ruck-Grenzwert (jT) zugeordneten Fahrzeug (2i) fahren.

6. Verfahren nach einem der Ansprüche 3 bis 5, **dadurch gekennzeichnet, dass** die Maximal-Beschleunigung (aiMax) und/oder der Maximal-Ruck (jiMax) eines Fahrzeuges (2i) in Abhängigkeit eines maximalen Antriebsvermögens (AVMax) und/oder eines maximalen Bremsvermögens (BVMax) eines der Fahrzeuge (2i) im Fahrzeugverbund (1) festgelegt und/oder angepasst werden.

7. Verfahren nach einem der Ansprüche 1 bis 6, **dadurch gekennzeichnet, dass** der Soll-Ruck (jiSoll) und/oder der Start-Ruck (jiStart) des jeweiligen Fahrzeuges (2i) in Abhängigkeit der Position (Pi) des Fahrzeuges (2i) innerhalb des Fahrzeugverbundes (1) festgelegt werden.

8. Verfahren nach Anspruch 9, **dadurch gekennzeichnet, dass** der Soll-Ruck (jiSoll) und/oder der Start-Ruck (jiStart) des jeweiligen Fahrzeuges (2i) mit steigender Position (Pi) innerhalb des Fahrzeugverbundes (1) abnimmt, wobei die Position (Pi) des ersten Fahrzeuges (21) des Fahrzeugverbundes (1) geringer ist als die Position (Pi) des letzten Fahrzeuges (23) des Fahrzeugverbundes (1).

9. Verfahren nach einem der Ansprüche 1 bis 8, **dadurch gekennzeichnet, dass** ein Zeitpunkt (t1, t2), zu dem die Zwischen-Beschleunigung (aiZ) eines Fahrzeuges (2i) mit dem Soll-Ruck (jiSoll) und/oder dem Start-Ruck (jiStart) in Richtung der angeforderten Soll-Beschleunigung (aiSoll) angepasst wird, in Abhängigkeit der Position (Pi) des Fahrzeuges (2i) innerhalb des Fahrzeugverbundes (1) festgelegt wird, wobei mit steigender Position (Pi) innerhalb des Fahrzeugverbundes (1)
- bei Vorgabe einer positiven Soll-Beschleunigung (aiSoll) ein späterer Zeitpunkt (t1, t2) und
- bei Vorgabe einer negativen Soll-Beschleunigung (aiSoll) ein früher Zeitpunkt (t1, t2) gewählt wird.

10. Verfahren nach einem der vorhergehenden Ansprüche, **dadurch gekennzeichnet, dass** die Beobachtung der Ist-Fahrdynamik (fist) die zeitliche Beobachtung einer Fahrzeug-Ist-Geschwindigkeit (vi) des jeweiligen Fahrzeuges (2i) und/oder einer Ist-Beschleunigung (ailst) des jeweiligen Fahrzeuges (2i) und/oder einem Ist-Ruck (jilst) des jeweiligen Fahrzeuges (2i) unter Berücksichtigung einer Ansprechzeit (tA) und/oder eines Ist-Abstands (dlstj) zwischen zwei Fahrzeugen (2i) des Fahrzeugverbundes (1) und/oder einer Ist-Abstand-Änderung (dAlstj) des Ist-Abstandes (dlstj) zwischen zwei Fahrzeugen (2i) des Fahrzeugverbundes (1) beinhaltet.

11. Verfahren nach Anspruch 10, **dadurch gekennzeichnet, dass** das fahrzeugspezifische Bewertungsergebnis (Ei) in Abhängigkeit davon gebildet wird, ob
- die Fahrzeug-Ist-Geschwindigkeit (vi) des jeweiligen Fahrzeuges (2i) konstant bleibt, und/oder
- die Ist-Beschleunigung (ailst) des jeweiligen Fahrzeuges (2i) konstant bleibt oder innerhalb eines vorgegebenen Zeitraums (tR) betragsmäßig abnimmt, wobei der vorgegebene Zeitraum (tR) abhängig von dem Soll-Ruck (jiSoll) unter Berücksichtigung der Ansprechzeit ist, und/oder
- der Ist-Abstand (dlstj) zwischen zwei Fahrzeugen (2i) konstant bleibt, und/oder
- die Ist-Abstand-Änderung (dAlstj) kleiner gleich Null ist.

12. Verfahren nach einem der vorgehenden Ansprüche, **dadurch gekennzeichnet, dass** die Soll-Beschleunigung (aiSoll) und/oder der Soll-Ruck (jiSoll) und/oder die fahrzeugspezifischen Beschleunigungsparameter (Bi) für das jeweilige Fahrzeug (2i) dezentral in den jeweiligen Fahrzeugen (2i) in Abhängigkeit von drahtlos zwischen den Fahrzeugen (2i) übermittelten Datensignalen (S) oder zentral in einem der Fahrzeuge (2i) festgelegt werden.

13. Verfahren nach Anspruch 12, **dadurch gekennzeichnet, dass** der Soll-Ruck (jiSoll) und/oder die fahrzeugspezifischen Beschleunigungsparameter (Bi) für das jeweilige Fahrzeug (2i) aus vorangegangenen Fahrten in einem Fahrzeugverbund (1) als Initialwerte übernommen werden.

14. Verfahren nach einem der vorhergehenden Ansprüche, **dadurch gekennzeichnet, dass** die Soll-Beschleunigung (aiSoll) und/oder der Soll-Ruck (jiSoll) für das jeweilige Fahrzeug (2i) automatisiert oder manuell vorgegeben wird, insbesondere in Abhängigkeit einer zentralen Beschleunigungsanforderung (aln), beispielsweise einer zentralen Notbremsanforderung (zNSoll) eines Notbremssystems (12).

15. Verfahren nach einem der vorhergehenden Ansprüche, **dadurch gekennzeichnet, dass** während der Umsetzung der Soll-Beschleunigung (aiSoll) unter Berücksichtigung des Soll-Rucks (jiSoll) und der fahrzeugspezifischen Beschleunigungsparameter (Bi) geprüft wird, ob der Ist-Abstand (dlstj) zwischen den einzelnen Fahrzeugen (2i) des Fahrzeugverbundes (1) einen vorgegebenen Soll-Abstand (dSollj) für die jeweiligen Fahrzeuge (2i) unterschreitet.

16. Steuereinheit (4) für ein Fahrzeug (2i), das sich in einem Fahrzeugverbund (1) befindet, insbesondere zur Durchführung eines Verfahrens nach einem der vorhergehenden Ansprüche, **dadurch gekennzeichnet, dass** die Steuereinheit (4) ausgebildet ist,
- ein Soll-Ruck zu bestimmen, der festlegt, wie die Beschleunigung ausgehend von einer Startbeschleunigung (aiStart) über die Zeit zu erhöhen ist, um die Beschleunigung an eine Sollbeschleunigung (aiSoll) anzunähern, wobei die Soll-Beschleunigung (aiSoll) im jeweiligen Fahrzeug (2i) des Fahrzeugverbundes (1) durch elektrisches Ansteuern eines Antriebssystems (7) und/oder eines Bremssystems (8) des jeweiligen Fahrzeuges (2i) mit dem Soll-Ruck (jiSoll) umgesetzt wird, der von vorgegebenen fahrzeugspezifischen Beschleunigungsparameter (Bi) bestimmt wird, wobei als fahrzeugspezifische Beschleunigungsparameter (Bi) die Start-Beschleunigung (aiStart) mit einem Beschleunigungs-Grenzwert (aiMax) und/oder einem Start-Ruck (jiStart) und/oder einem Ruck-Grenzwert (jiMax) vorgegeben werden, um die angeforderte Soll-Beschleunigung (aiSoll) umzusetzen;
- eine Ist-Fahrdynamik (fist) des jeweiligen Fahrzeuges (2i) des Fahrzeugverbundes (1) während der Umsetzung der Soll-Beschleunigung (aiSoll) zu beobachten;
- die beobachtete Ist-Fahrdynamik (fist) des jeweiligen Fahrzeuges (2i) anhand der angeforderten Soll-Beschleunigung (aiSoll) für das jeweilige Fahrzeug (2i) zu beobachten und ein fahrzeugspezifisches Bewertungsergebnis (Ei) auszugeben;
- einen fahrzeugspezifischen Beschleunigungs-Grenzwert (aiMax) und/oder einen fahrzeugspezifischen Ruck-Grenzwert (jiMax) in Abhängigkeit des fahrzeugspezifischen Bewertungsergebnisses (Ei) zu ermitteln und auszugeben zum Anpassen der fahrzeugspezifischen Beschleunigungsparameter (Bi) in mindestens einem der Fahrzeuge (2i) des Fahrzeugverbundes (1).

17. Steuereinheit (4) nach Anspruch 16, **dadurch gekennzeichnet, dass** die Steuereinheit (4) ferner ausgebildet ist, ein über eine drahtlose Datenkommunikation (9) zwischen den Fahrzeugen (2i) des Fahrzeugverbundes (1) übertragenes Datensignal (S) zu senden und/oder zu empfangen und den ermittelten Beschleunigungs-Grenzwert (aT) und/oder Ruck-Grenzwert (jT) über das Datensignal (S) an die anderen Fahrzeuge (2i) des Fahrzeugverbundes (1) zu übermitteln und/oder einen einem anderen Fahrzeug (2i) zugeordneten Beschleunigungs-Grenzwert (aT) und/oder Ruck-Grenzwert (jT) zu empfangen und die Beschleunigungsparameter (Bi) in Abhängigkeit davon anzupassen.

18. Fahrzeug (2i) mit einer Steuereinheit (4) nach Anspruch 16 oder 17.

## Claims

1. A method for coordinating vehicles (2i) of a vehicle group (1), the vehicles (2i) each having an electronically controllable drive system (7) and/or an electronically controllable brake system (8) for implementing a vehicle-specific requested target acceleration (aiSoll), **characterized in that,** in order to implement the target acceleration (aiSoll), a target jerk (jiSoll) is determined which specifies how the acceleration is to be increased over time starting from a starting acceleration (aiStart) in order to bring the acceleration closer to the target acceleration (aiSoll), and each vehicle (2i) is assigned a position (Pi) in the vehicle group (1), having at least the following steps:
- converting the vehicle-specific requested target acceleration (aiSoll) in each vehicle (2i) of the vehicle group (1) by electrically actuating the drive system (7) and/or the brake system (8) of each vehicle (2i) with the target jerk (jiSoll), the target jerk (jiSoll) being defined by predetermined vehicle-specific acceleration parameters (Bi), the start acceleration (aiStart) with an acceleration limit value (aiMax) and/or a start jerk (jiStart) and/or a jerk limit value (jiMax) being predefined as vehicle-specific acceleration parameters (Bi) in order to implement the requested target acceleration (aiSoll);
- observing actual driving dynamics (flst) of the vehicles (2i) of the vehicle group (1) during the implementation of the target acceleration (aiSoll) (ST4);
- evaluating the observed actual driving dynamics (flst) of the vehicles (2i) using the requested target acceleration (aiSoll) for each vehicle (2i) and outputting a vehicle-specific evaluation result (Ei) (ST5);
- determining and outputting the vehicle-specific acceleration limit value (aiMax) and/or the vehicle-specific jerk limit value (jiMax) as a function of the vehicle-specific evaluation result (Ei) (ST6) and adapting the vehicle-specific acceleration parameters (Bi) in at least one of the vehicles (2i) of the vehicle group (1) (ST7, ST8) in order to convert the target acceleration (aiSoll) with the adapted vehicle-specific acceleration parameters (Bi).

2. The method according to claim 1, **characterized in that** the evaluation of the observed actual driving dynamics (flst) includes a comparison of the actual driving dynamics (flst) with a target driving dynamics (fSoll) for each vehicle (2i) to determine whether each vehicle (2i) is capable of achieving the target driving dynamics (fSoll), the target driving dynamics (fSoll) preferably being indicated by the target acceleration (aiSoll) taking into account the target jerk (jiSoll) and the acceleration parameters (Bi).

3. The method according to either of the preceding claims,
**characterized in that** a maximum acceleration (aiMax) and/or a maximum jerk (jiMax) are defined as acceleration parameters (Bi) for limiting a currently requested intermediate acceleration (aiZ) and/or the target jerk (jiSoll) when converting the requested target acceleration (aiSoll) taking into account the vehicle-specific acceleration parameters (Bi).

4. The method according to claim 3, **characterized in that** the maximum acceleration (aiMax) and/or the maximum jerk (jiMax) are adjusted as a function of the determined acceleration limit value (aT) and/or the jerk limit value (jT).

5. The method according to claim 4, **characterized in that** the maximum acceleration (aiMax) as a function of the determined acceleration limit value (aT) and/or the maximum jerk (jiMax) as a function of the determined jerk limit value (jT) are only adjusted for the vehicles (2i) of the vehicle group (1) which
- travel behind the vehicle (2i) assigned to the acceleration limit value (aT) and/or the jerk limit value (jT) when a positive target acceleration (aiSoll) is specified and
- travel ahead of the vehicle (2i) assigned to the acceleration limit value (aT) and/or the jerk limit value (jT) when a negative target acceleration (aiSoll) is specified.

6. The method according to any of claims 3 to 5, **characterized in that** the maximum acceleration (aiMax) and/or the maximum jerk (jiMax) of a vehicle (2i) are determined and/or adapted as a function of a maximum propulsion capacity (AVMax) and/or a maximum braking capacity (BVMax) of one of the vehicles (2i) in the vehicle group (1).

7. The method according to any of claims 1 to 6, **characterized in that** the target jerk (jiSoll) and/or the start jerk (jiStart) of each vehicle (2i) is determined as a function of the position (Pi) of the vehicle (2i).

8. The method according to claim 9, **characterized in that** the target jerk (jiSoll) and/or the start jerk (jiStart) of each vehicle (2i) decreases as the position (Pi) within the vehicle group (1) increases, the position (Pi) of the first vehicle (21) of the vehicle group (1) being lower than the position (Pi) of the last vehicle (23) of the vehicle group (1).

9. The method according to any of claims 1 to 8, **characterized in that** a time (t1, t2) at which the intermediate acceleration (aiZ) of a vehicle (2i) with the target jerk (jiSoll) and/or the start jerk (jiStart) is adapted in the direction of the requested target acceleration (aiSoll) is determined as a function of the position (Pi) of the vehicle (2i) within the vehicle group (1), as the position (Pi) within the vehicle group (1) increases,
- a later time (t1, t2) being selected when a positive target acceleration (aiSoll) is specified and
- an earlier time (t1, t2) being selected when a negative target acceleration (aiSoll) is specified.

10. The method according to any of the preceding claims,
**characterized in that** the observation of the actual driving dynamics (flst) comprises the temporal observation of an actual vehicle speed (vi) of each vehicle (2i) and/or an actual acceleration (ailst) of each vehicle (2i) and/or an actual jerk (jiIst) of each vehicle (2i), taking into account a response time (tA) and/or an actual distance (dlstj) between two vehicles (2i) of the vehicle group (1) and/or an actual distance change (dAlstj) of the actual distance (dlstj) between two vehicles (2i) of the vehicle group (1).

11. The method according to claim 10, **characterized in that** the vehicle-specific assessment result (Ei) is formed as a function of whether
- the actual vehicle speed (vi) of each vehicle (2i) remains constant, and/or
- the actual acceleration (ailst) of each vehicle (2i) remains constant or decreases in amount within a predetermined period (tR), the predetermined period (tR) being dependent on the target jerk (jiSoll) taking into account the response time, and/or
- the actual distance (dlstj) between two vehicles (2i) remains constant, and/or
- the actual distance change (dAlstj) is less than or equal to zero.

12. The method according to any of the preceding claims, **characterized in that** the target acceleration (aiSoll) and/or the target jerk (jiSoll) and/or the vehicle-specific acceleration parameters (Bi) for each vehicle (2i) are determined decentrally in each of the vehicles (2i) as a function of data signals (S) transmitted wirelessly between the vehicles (2i) or centrally in one of the vehicles (2i).

13. The method according to claim 12, **characterized in that** the target jerk (jiSoll) and/or the vehicle-specific acceleration parameters (Bi) for each vehicle (2i) are adopted from previous journeys in a vehicle group (1) as initial values.

14. The method according to any of the preceding claims, **characterized in that** the target acceleration (aiSoll) and/or the target jerk (jiSoll) for each vehicle (2i) is predefined automatically or manually, in particular as a function of a central acceleration requirement (aln), for example a central emergency brake requirement (zNSoll) of an emergency brake system (12).

15. The method according to any of the preceding claims,
**characterized in that** during the implementation of the target acceleration (aiSoll), taking into account the target jerk (jiSoll) and the vehicle-specific acceleration parameters (Bi), it is checked whether the actual distance (dlstj) between the individual vehicles (2i) of the vehicle combination (1) falls below a predetermined target distance (dSollj) for each of the vehicles (2i).

16. A control unit (4) for a vehicle (2i) which is located in a vehicle group (1), in particular for carrying out a method according to any of the preceding claims, **characterized in that** the control unit (4) is designed,
- to determine a target jerk which specifies how the acceleration is to be increased over time starting from a starting acceleration (aiStart) in order to bring the acceleration closer to a target acceleration (aiSoll), the target acceleration (aiSoll) being implemented in each vehicle (2i) of the vehicle group (1) by electrically actuating a drive system (7) and/or a brake system (8) of each vehicle (2i) with the target jerk (jiSoll), which is determined by predefined vehicle-specific acceleration parameters (Bi), the start acceleration (aiStart) with an acceleration limit value (aiMax) and/or a start jerk (jiStart) and/or a jerk limit value (jiMax) being predefined as vehicle-specific acceleration parameters (Bi) in order to implement the requested target acceleration (aiSoll);
- to observe an actual driving dynamic (flst) of each vehicle (2i) of the vehicle group (1) during the implementation of the target acceleration (aiSoll);
- to observe the observed actual driving dynamics (flst) of each vehicle (2i) on the basis of the requested target acceleration (aiSoll) for each vehicle (2i) and to output a vehicle-specific evaluation result (Ei);
- to determine a vehicle-specific acceleration limit value (aiMax) and/or a vehicle-specific jerk limit value (jiMax) as a function of the vehicle-specific evaluation result (Ei) and to output it for adapting the vehicle-specific acceleration parameters (Bi) in at least one of the vehicles (2i) of the vehicle group (1).

17. The control unit (4) according to claim 16, **characterized in that** the control unit (4) is further configured for transmitting and/or receiving a data signal (S) transmitted via wireless data communication (9) between the vehicles (2i) of the vehicle group (1) and transmitting the determined acceleration limit value (aT) and/or jerk limit value (jT) via the data signal (S) to the other vehicles (2i) of the vehicle group (1) and/or receiving an acceleration limit value (aT) and/or jerk limit value (jT) assigned to another vehicle (2i) and adjusting the acceleration parameters (Bi) as a function thereof.

18. A vehicle (2i) having a control unit (4) according to claim 16 or claim 17.

## Revendications

1. Procédé de coordination de véhicules (2i) d'un train de véhicules (1), dans lequel les véhicules (2i) présentent respectivement un système d'entraînement (7) à commande électronique et/ou un système de freinage (8) à commande électronique pour l'exécution d'une accélération de consigne (aiSoll) demandée spécifique au véhicule, **caractérisé en ce que** pour l'exécution de l'accélération de consigne (aiSoll), une secousse de consigne (jiSoll) est déterminée, qui définit la manière dont l'accélération doit être augmentée au fil du temps à partir d'une accélération de démarrage (aiStart), afin d'approcher l'accélération de l'accélération de consigne (aiSoll) et une position (Pi) dans le train de véhicules (1) est attribuée à chaque véhicule (2i), comportant au moins les étapes suivantes :
- exécution de l'accélération de consigne (aiSoll) demandée spécifique au véhicule dans chaque véhicule (2i) du train de véhicules (1) par la commande électrique du système d'entraînement (7) et/ou du système de freinage (8) du véhicule (2i) respectif avec la secousse de consigne (jiSoll), dans lequel la secousse de consigne (jiSoll) est définie par des paramètres d'accélération spécifiques au véhicule prédéfinis (Bi), dans lequel, en guise de paramètre d'accélération spécifique au véhicule (Bi), l'accélération de démarrage (aiStart) est prédéfinie avec une valeur limite d'accélération (aiMax) et/ou une secousse de démarrage (jiStart) et/ou une valeur limite de secousse (jiMax), afin d'exécuter l'accélération de consigne (aiSoll) demandée ;
- observation d'une dynamique de conduite réelle (flst) des véhicules (2i) du train de véhicules (1) pendant l'exécution de l'accélération de consigne (aiSoll) (ST4) ;
- évaluation de la dynamique de conduite réelle observée (flst) des véhicules (2i) à l'aide de l'accélération de consigne (aiSoll) demandée pour le véhicule (2i) respectif et émission d'un résultat d'évaluation spécifique au véhicule (Ei) (ST5) ;
- détermination et émission de la valeur limite d'accélération spécifique au véhicule (aiMax) et/ou de la valeur limite de secousse spécifique au véhicule (jiMax) en fonction du résultat d'évaluation spécifique au véhicule (Ei) (ST6) et adaptation du paramètre d'accélération spécifique au véhicule (Bi) dans au moins un des véhicules (2i) du train de véhicules (1) (ST7, ST8) pour l'exécution de l'accélération de consigne (aiSoll) avec les paramètres d'accélération spécifiques au véhicule (Bi) adaptés.

2. Procédé selon la revendication 1, **caractérisé en ce que** l'évaluation de la dynamique de conduite réelle (flst) observée contient une comparaison de la dynamique de conduite réelle (flst) avec une dynamique de conduite de consigne (fSoll) pour le véhicule (2i) respectif afin de déterminer si le véhicule (2i) respectif est en mesure d'atteindre la dynamique de conduite de consigne (fSoll), dans lequel la dynamique de conduite de consigne (fSoll) est de préférence indiquée par l'accélération de consigne (aiSoll) en tenant compte de la secousse de consigne (jiSoll) et du paramètre d'accélération (Bi).

3. Procédé selon l'une quelconque des revendications précédentes,
**caractérisé en ce que,** en guise de paramètre d'accélération (Bi), une accélération maximale (aiMax) et/ou une secousse maximale (jiMax) sont définies pour délimiter une accélération intermédiaire demandée réelle (aiZ) et/ou la secousse de consigne (jiSoll) lors de l'exécution de l'accélération de consigne demandée (aiSoll) en tenant compte du paramètre d'accélération spécifique au véhicule (Bi).

4. Procédé selon la revendication 3, **caractérisé en ce que** l'accélération maximale (aiMax) et/ou la secousse maximale (jiMax) sont adaptées en fonction de la valeur limite d'accélération déterminée (aT) et/ou de la valeur limite de secousse (jT).

5. Procédé selon la revendication 4, **caractérisé en ce que** l'accélération maximale (aiMax) est adaptée en fonction de la valeur limite d'accélération déterminée (aT) et/ou la secousse maximale (jiMax) est adaptée en fonction de la valeur limite de secousse déterminée (jT) uniquement pour les véhicules (2i) du train de véhicules (1) qui
- lors d'une spécification d'une accélération de consigne positive (aiSoll), conduisent derrière le véhicule (2i) associé à la valeur limite d'accélération (aT) et/ou la valeur limite de secousse (jT) et
- lors d'une spécification d'une accélération de consigne négative (aiSoll), conduisent devant le véhicule (2i) associé à la valeur limite d'accélération (aT) et/ou la valeur limite de secousse (jT).

6. Procédé selon l'une des revendications 3 à 5, **caractérisé en ce que** l'accélération maximale (aiMax) et/ou la secousse maximale (jiMax) d'un véhicule (2i) sont définies et/ou adaptées en fonction d'une capacité d'entraînement maximale (AVMax) et/ou d'une capacité de freinage maximale (BVMax) d'un des véhicules (2i) dans le train de véhicules (1).

7. Procédé selon l'une des revendications 1 à 6, **caractérisé en ce que** la secousse de consigne (jiSoll) et/ou la secousse de démarrage (jiStart) du véhicule (2i) respectif sont définies en fonction de la position (Pi) du véhicule (2i) au sein du train de véhicules (1).

8. Procédé selon la revendication 9, **caractérisé en ce que** la secousse de consigne (jiSoll) et/ou la secousse de démarrage (jiStart) du véhicule (2i) respectif diminue avec l'augmentation de la position (Pi) au sein du train de véhicules (1), dans lequel la position (Pi) du premier véhicule (21) du train de véhicules (1) est inférieure à la position (Pi) du dernier véhicule (23) du train de véhicules (1).

9. Procédé selon l'une des revendications 1 à 8, **caractérisé en ce qu'un** instant (t1, t2), auquel l'accélération intermédiaire (aiZ) d'un véhicule (2i) est adaptée avec la secousse de consigne (jiSoll) et/ou la secousse de démarrage (jiStart) en direction de l'accélération de consigne demandée (aiSoll), est défini en fonction de la position (Pi) du véhicule (2i) au sein du train de véhicules (1), dans lequel avec l'augmentation de la position (Pi) au sein du train de véhicules (1)
- lors d'une spécification d'une accélération de consigne positive (aiSoll), un instant ultérieur (t1, t2) est sélectionné et
- lors d'une spécification d'une accélération de consigne négative (aiSoll), un instant antérieur (t1, t2) est sélectionné.

10. Procédé selon l'une quelconque des revendications précédentes,
**caractérisé en ce que** l'observation de la dynamique de conduite réelle (flst) contient l'observation temporelle d'une vitesse réelle de véhicule (vi) du véhicule (2i) respectif et/ou d'une accélération réelle (ailst) du véhicule (2i) respectif et/ou d'une secousse réelle (jiIst) du véhicule (2i) respectif en tenant compte d'un temps de réponse (tA) et/ou d'un espacement réel (dlstj) entre deux véhicules (2i) du train de véhicules (1) et/ou d'une modification d'espacement réel (dAlstj) de l'espacement réel (dlstj) entre deux véhicules (2i) du train de véhicules (1).

11. Procédé selon la revendication 10, **caractérisé en ce que** le résultat d'évaluation spécifique au véhicule (Ei) est formé en fonction de si
- la vitesse réelle de véhicule (vi) du véhicule (2i) respectif reste constante et/ou
- l'accélération réelle (ailst) du véhicule (2i) respectif reste constante ou diminue en valeur absolue au cours d'une période prédéfinie (tR), dans lequel la période prédéfinie (tR) dépend de la secousse de consigne (jiSoll) en tenant compte du temps de réponse et/ou
- l'espacement réel (dlstj) entre deux véhicules (2i) reste constant et/ou
- la modification d'espacement réel (dAlstj) est inférieure ou égale à zéro.

12. Procédé selon l'une quelconque des revendications précédentes, **caractérisé en ce que** l'accélération de consigne (aiSoll) et/ou la secousse de consigne (jiSoll) et/ou le paramètre d'accélération spécifique au véhicule (Bi) pour le véhicule (2i) respectif sont définis de manière décentralisée dans les véhicules (2i) respectifs en fonction de signaux de données (S) transmis sans fil entre les véhicules (2i) ou de manière centralisée dans l'un des véhicules (2i).

13. Procédé selon la revendication 12, **caractérisé en ce que** la secousse de consigne (jiSoll) et/ou le paramètre d'accélération spécifique au véhicule (Bi) pour le véhicule (2i) respectif sont repris comme valeurs initiales à partir de trajets précédents dans un train de véhicules (1).

14. Procédé selon l'une quelconque des revendications précédentes,
**caractérisé en ce que** l'accélération de consigne (aiSoll) et/ou la secousse de consigne (jiSoll) pour le véhicule (2i) respectif sont prédéfinies de manière automatisée ou manuelle, en particulier en fonction d'une demande d'accélération centrale (aln), par exemple d'une demande de freinage d'urgence centrale (zNSoll) d'un système de freinage d'urgence (12).

15. Procédé selon l'une quelconque des revendications précédentes,
**caractérisé en ce que** pendant l'exécution de l'accélération de consigne (aiSoll) en tenant compte de la secousse de consigne (jiSoll) et du paramètre d'accélération spécifique au véhicule (Bi), il est vérifié si l'espacement réel (dlstj) entre les véhicules individuels (2i) du train de véhicules (1) passe en deçà d'un espacement de consigne (dSollj) prédéfini pour les véhicules (2i) respectifs.

16. Unité de commande (4) pour un véhicule (2i), qui se trouve dans un train de véhicules (1), en particulier pour la réalisation d'un procédé selon l'une quelconque des revendications précédentes, **caractérisée en ce que** l'unité de commande (4) est conçue,
- pour déterminer une secousse de consigne, qui définit la manière dont l'accélération doit être augmentée au fil du temps à partir d'une accélération de démarrage (aiStart), afin d'approcher l'accélération d'une accélération de consigne (aiSoll), dans laquelle l'accélération de consigne (aiSoll) est exécutée dans le véhicule (2i) respectif du train de véhicules (1) par commande électrique d'un système d'entraînement (7) et/ou d'un système de freinage (8) du véhicule (2i) respectif avec la secousse de consigne (jiSoll), qui a été déterminée par le paramètre d'accélération spécifique au véhicule (Bi), dans laquelle, en guise de paramètre d'accélération spécifique au véhicule (Bi), l'accélération de démarrage (aiStart) est prédéfinie avec une valeur limite d'accélération (aiMax) et/ou une secousse de démarrage (jiStart) et/ou une valeur limite de secousse (jiMax), afin d'exécuter l'accélération de consigne (aiSoll) demandée ;
- pour observer une dynamique de conduite réelle (flst) du véhicule (2i) respectif du train de véhicules (1) pendant l'exécution de l'accélération de consigne (aiSoll) ;
- pour observer la dynamique de conduite réelle observée (flst) du véhicule (2i) respectif à l'aide de l'accélération de consigne (aiSoll) demandée pour le véhicule (2i) respectif et émettre un résultat d'évaluation spécifique au véhicule (Ei) ;
- pour déterminer et émettre une valeur limite d'accélération spécifique au véhicule (aiMax) et/ou une valeur limite de secousse spécifique au véhicule (jiMax) en fonction du résultat d'évaluation spécifique au véhicule (Ei) et pour l'adaptation du paramètre d'accélération spécifique au véhicule (Bi) dans au moins un des véhicules (2i) du train de véhicules (1).

17. Unité de commande (4) selon la revendication 16,
**caractérisée en ce que** l'unité de commande (4) est en outre conçue pour envoyer et/ou recevoir, par l'intermédiaire d'une communication de données sans fil (9) entre les véhicules (2i) du train de véhicules (1), un signal de données transmis (S) et pour transmettre la valeur limite d'accélération déterminée (aT) et/ou la valeur limite de secousse (jT) par l'intermédiaire du signal de données (S) aux autres véhicules (2i) du train de véhicules (1) et/ou pour recevoir une valeur limite d'accélération (aT) et/ou une valeur limite de secousse (jT) associée à un autre véhicule (2i) et pour adapter le paramètre d'accélération (Bi) en fonction de celle-ci.

18. Véhicule (2i) comportant une unité de commande (4) selon la revendication 16 ou 17.
